(19) 

**Europäisches Patentamt**
**European Patent Office**
**Office européen des brevets**

(11) **EP 4 302 050 B1**

(12) **FASCICULE DE BREVET EUROPEEN**

(45) Date de publication et mention
de la délivrance du brevet:
**13.08.2025 Bulletin 2025/33**

(21) Numéro de dépôt: **22709328.3**

(22) Date de dépôt: **03.03.2022**

(51) Classification Internationale des Brevets (IPC):
***G01C 19/72*** *(2006.01)*

(52) Classification Coopérative des Brevets (CPC):
**G01C 19/726; G01C 19/72**

(86) Numéro de dépôt international:
**PCT/EP2022/055467**

(87) Numéro de publication internationale:
**WO 2022/184860 (09.09.2022 Gazette 2022/36)**

(54) **PROCÉDÉ DE RÉDUCTION DE L'EFFET KERR DANS UN DISPOSITIF DE MESURE INTERFÉROMÉTRIQUE ET UN DISPOSITIF DE MESURE INTERFÉROMÉTRIQUE CONFIGURÉ POUR METTRE EN OEUVRE CE PROCÉDÉ**

VERFAHREN ZUR VERMINDERUNG DES KERR-EFFEKTS IN EINER INTERFEROMETRISCHEN MESSVORRICHTUNG UND INTERFEROMETRISCHE MESSVORRICHTUNG ZUR DURCHFÜHRUNG DIESES VERFAHRENS

PROCÉDÉ DE RÉDUCTION DE L'EFFET KERR DANS UN DISPOSITIF DE MESURE INTERFÉROMÉTRIQUE ET UN DISPOSITIF DE MESURE INTERFÉROMÉTRIQUE CONFIGURÉ POUR METTRE EN OEUVRE CE PROCÉDÉ

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **04.03.2021 FR 2102120**

(43) Date de publication de la demande:
**10.01.2024 Bulletin 2024/02**

(73) Titulaires:
• **EXAIL**
**78100 Saint-Germain-en-Laye (FR)**
• **Centre National d'Etudes Spatiales**
**75001 Paris (FR)**

(72) Inventeurs:
• **DUCLOUX, Eric**
**78100 Saint-Germain-en-Laye (FR)**
• **LHOMME, Louis**
**78100 Saint-Germain-en-Laye (FR)**
• **GROSSARD, Nicolas**
**78100 Saint-Germain-en-Laye (FR)**

• **HAUDEN, Jérôme**
**78100 Saint-Germain-en-Laye (FR)**

(74) Mandataire: **Jacobacci Coralis Harle**
**32, rue de l'Arcade**
**75008 Paris (FR)**

(56) Documents cités:
**US-A- 4 773 759**

• **BERGH R A ET AL: "COMPENSATION OF THE OPTICAL KERR EFFECT IN FIBER-OPTIC GYROSCOPES", 1 January 1989, SELECTED PAPERS ON FIBER OPTIC GYROSCOPES; [SPIE MILESTONE SERIES], BELLINGHAM, SPIE, US, PAGE(S) 316 - 318, XP000232998**
• **LIU R Y ET AL: "PROGRESS TOWARD AN INERTIAL GRADE FIBER OPTIC GYROSCOPE", 1 January 1989, SELECTED PAPERS ON FIBER OPTIC GYROSCOPES; [SPIE MILESTONE SERIES], BELLINGHAM, SPIE, US, PAGE(S) 585 - 589, XP000233015**

## Description

### Domaine technique

La présente invention concerne d'une façon générale le domaine des systèmes interférométriques.

L'invention concerne notamment les systèmes interférométriques comportant un interféromètre de Sagnac comportant une boucle de fibre optique et trouve une application particulièrement avantageuse dans les gyromètres à fibre optique (communément désignés par l'homme du métier sous l'acronyme anglais FOG, pour « Fiber Optic Gyroscope »).

L'invention concerne tout particulièrement un procédé de réduction de l'effet Kerr dans un dispositif de mesure interférométrique et un dispositif de mesure interférométrique configuré pour mettre en œuvre ce procédé.

### Arrière-plan technologique

Un interféromètre de Sagnac comporte classiquement une source de lumière générant un signal optique d'entrée couplé à une boucle optique par l'intermédiaire d'un séparateur optique. Le séparateur optique est configuré pour diviser le signal optique d'entrée en deux signaux circulant en sens contraires dans la boucle optique, classiquement appelés « signaux contra-propagatifs ».

En sortie de la boucle optique, les deux signaux contra-propagatifs se combinent dans le séparateur optique en produisant des interférences dues à un déphasage optique entre les deux signaux contra-propagatifs qui est apparu lors de leur circulation dans la boucle optique. La mesure du déphasage entre les deux signaux contra-propagatifs permet de quantifier le phénomène qui l'a engendré. Par exemple, dans un gyromètre comprenant un interféromètre de Sagnac, le déphasage est proportionnel à une rotation du gyromètre dans le plan de la boucle optique.

Un mode de réalisation classique de la boucle optique comprend l'emploi d'une bobine de fibre optique. Toutefois, des phénomènes parasites peuvent fausser la mesure en introduisant entre les deux signaux contra-propagatifs un déphasage qui ne dépend pas du phénomène à quantifier et qu'il n'est pas possible de distinguer du phénomène à quantifier. Ainsi en sortie d'un interféromètre de Sagnac, on mesure un déphasage total égal à la somme du déphasage induit par la rotation du gyromètre et d'un déphasage parasite.

Dans certaines applications, notamment les applications de très haute précision, par exemple les mesures de rotation à l'aide d'un gyromètre, certains effets parasites faussent les mesures de façon non négligeable. C'est le cas de l'effet Kerr.

L'effet Kerr désigne un phénomène électro-optique de biréfringence, c'est-à-dire une variation de l'indice de réfraction d'un matériau sous l'effet d'un champ électrique. Dans un gyromètre à fibre optique, les champs électriques des signaux contra-propagatifs modifient de façon substantielle l'indice de réfraction optique de la fibre de la bobine ; chacun des faisceaux contra-propagatifs subit un effet Kerr auto-induit et un effet Kerr induit par l'autre signal contra-propagatif.

L'effet Kerr est un problème particulièrement gênant dans les gyromètres à fibre optique utilisant des sources optiques spectralement fines.

Il a été observé que dans un gyromètre à fibre optique, le déphasage $\Delta\varphi$k généré par l'effet Kerr s'exprime par la formule suivante :

[math. 1]

$$\Delta\varphi_k = \varepsilon(\gamma - 1)(P_M - \alpha < P >)k * L$$

Avec $\gamma$ l'équilibrage des voies du Sagnac, c'est-à-dire le rapport entre les puissances optiques moyennes de chacune des deux voies de l'interféromètre, $P_M$ la puissance de sortie au point de mesure, k le nombre d'onde optique et L la longueur de fibre optique.

Le facteur $\varepsilon$ est une grandeur caractéristique de la fibre optique, représentative de la variation d'indice de réfraction induite par les signaux contra-propagatifs. Dans une fibre optique en silice, ce facteur dépend de la susceptibilité diélectrique de la silice $\chi_e^{(3)}$ et est environ égal à $2 \times 10^{-15}$ $\mu W^{-1}$. Cette grandeur caractéristique est notamment détaillée dans l'ouvrage « The fiber-optic gyroscope », H. C. Lefèvre, Artech House, Second Edition, 2014, Chapitre 7.3.

Le facteur $\alpha$ est une constante proche de 2 ou égale à 2, par exemple comprise entre 1,6 et 2,4, dont la valeur est propre à une structure de gyromètre.

Il est donc apparent qu'une solution pour annuler le déphasage $\Delta\varphi$k induit par l'effet Kerr consiste à faire en sorte que l'équilibrage $\gamma$ des voies de l'interféromètre de Sagnac soit égal à 1 ou, en d'autres termes, que les puissances moyennes des signaux contra-propagatifs soient égales.

L'équilibrage $\gamma$ des puissances est non seulement dû à la géométrie du séparateur optique, mais également aux couplages des deux extrémités de la boucle de fibre optique au séparateur. Il est en effet difficile de réaliser les couplages de chaque extrémité de façon identique.

Et, bien que chaque signal contra-propagatif circule dans la fibre avec une puissance qui lui est propre, les deux signaux contra-propagatifs présentent, au moment de se recombiner, la même puissance optique puisque les chemins optiques qu'ils ont empruntés sont réciproques.

L'équilibrage $\gamma$ des puissances est donc difficile à caractériser. Le document US4773759 présente une méthode de compensation de l'effet Kerr dans un interféromètre à fibre optique, comprenant une modulation de l'intensité d'au moins une des ondes lumineuses contra-propagatives avec une forme d'onde qui réduit la différence de phase induite par l'effet Kerr.

**Résumé de l'invention**

La présente invention apporte une solution aux problèmes susmentionnés.

Selon un aspect, il est proposé un procédé de réduction de l'effet Kerr dans un dispositif de mesure interférométrique comportant un générateur de signal lumineux configuré pour émettre un signal lumineux périodique d'entrée présentant au moins deux valeurs de puissance d'entrée non nulles, et un interféromètre de Sagnac comprenant une boucle optique, un séparateur configuré pour coupler le signal lumineux périodique d'entrée à la boucle optique de façon à diviser le signal lumineux en un premier signal et en un deuxième signal mutuellement contra-propagatifs qui présentent chacun au moins deux valeurs de puissance correspondant chacune à une valeur de puissance d'entrée et qui se propagent en sens contraires dans la boucle optique et pour combiner lesdits signaux contra-propagatifs après leur propagation dans la boucle de façon à former un signal de sortie périodique présentant au moins deux valeurs de puissance de sortie correspondant chacun à une valeur de puissance d'entrée, le procédé comprenant une modulation périodique à au moins deux états opposés du déphasage entre les deux signaux contra-propagatifs (appelée aussi « modulation de phase ») et, sur une même période de modulation,

a. une première série de mesures qui comporte au moins deux mesures de puissance de sortie en des points du signal de sortie qui présentent des premières valeurs de puissance de sortie (PS) correspondant à une première valeur de puissance d'entrée et qui correspondent à des états de modulation de phase opposés;

b. une première détermination de déphasage entre les deux signaux contra-propagatifs présentant chacun une valeur de puissance correspondant à la première valeur de puissance d'entrée, et une annulation de ce déphasage qui comporte un ajustement de la modulation asservi sur l'annulation d'un premier terme de démodulation calculé qui est fonction desdites au moins deux mesures de la première série de mesure et qui est représentatif dudit déphasage, puis

c. une deuxième série de mesures qui comporte au moins deux mesures en des points du signal de sortie qui présentent des deuxièmes valeurs de puissance de sortie correspondant à une deuxième valeur de puissance d'entrée et qui correspondent à des états de modulation opposés;

d. une deuxième détermination de déphasage entre les deux signaux contra-propagatifs présentant chacun une valeur de puissance correspondant à la deuxième valeur de puissance d'entrée, et une annulation de ce déphasage asservie sur l'annulation d'un deuxième terme de démodulation calculé qui est fonction desdites au moins deux mesures de la deuxième série de mesure et qui est représentatif du déphasage.

L'effet Kerr dépend de la puissance lumineuse des signaux contra-propagatifs dans la bobine et donc de la puissance lumineuse du signal lumineux d'entrée dont ils sont directement issus. Ainsi l'effet Kerr produit par les signaux contra-propagatifs présentant des valeurs de puissance correspondant à la première valeur de puissance d'entrée est distinct de l'effet Kerr produit par les signaux contra-propagatifs présentant une valeur de puissance différente, en particulier ici une valeur de puissance correspondant à la deuxième valeur de puissance d'entrée.

Par conséquent, l'annulation du déphasage déterminé lors de la première détermination, c'est-à-dire un déphasage induit par l'effet Kerr associé à la première valeur de puissance d'entrée et induit par la rotation du gyromètre, est inopérante sur le déphasage déterminé lors de la deuxième détermination, c'est-à-dire le déphasage induit par l'effet Kerr associé à la deuxième valeur de puissance d'entrée, si l'effet Kerr dans la bobine est non nul. Ainsi le déphasage déterminé lors de la deuxième détermination est avantageusement une grandeur représentative de l'effet Kerr et de l'équilibrage des voies. En ajustant l'équilibrage des voies de l'interféromètre de façon à annuler cette valeur de déphasage, on obtient un équilibrage des voies égal à 1 ou très proche de 1 et une annulation des conséquences de l'effet Kerr.

Il convient de noter que le terme « puissance moyenne », lorsqu'il fait référence à un signal périodique, est entendu ici comme la puissance moyenne du signal périodique sur un nombre entier de périodes.

Selon un mode de mise en œuvre, l'annulation du déphasage comporte un ajustement du rapport des puissances moyennes des signaux contra-propagatif qui est asservi sur l'annulation du deuxième terme de démodulation.

Selon un mode de mise en œuvre, la modulation de phase est une modulation à quatre états opposés deux à deux.

La modulation de phase des deux signaux contra-propagatifs par deux valeurs de déphasage, autrement appelée modulation de phase à deux états, permet de déterminer la rotation du gyromètre. Avantageusement, la modulation de phase par quatre valeurs de déphasage, ou modulation de phase à quatre états, permet en outre de déterminer un facteur d'échelle du déphasage, et donc de déterminer le Vπ, c'est-à-dire la tension nécessaire pour obtenir un déphasage de π entre les deux signaux contra-propagatifs.

Selon un mode de mise en œuvre, la première série de mesures et la deuxième série de mesure sont réalisées en des points du signal de sortie qui correspondent aux mêmes états de modulation de phase.

Selon un mode de mise en œuvre du procédé

a. la première série de mesures comporte une première mesure, une deuxième mesure, une troisième mesure et une quatrième mesure en des points du signal de sortie qui correspondent respectivement à un premier état de modulation, à un deuxième état de modulation, à un troisième état de modulation et à un quatrième état de modulation, le premier et le troisième états de modulation étant opposés et le deuxième et le quatrième état de modulation étant opposés, le premier terme de démodulation étant égal à la différence entre la somme des première et quatrième mesures et la somme des deuxième et troisième mesures ;

b. la deuxième série de mesures comporte une cinquième mesure, une sixième mesure, une septième mesure et une huitième mesure en des points du signal de sortie qui correspondent respectivement au premier état de modulation, au deuxième état de modulation, au troisième état de modulation et au quatrième état de modulation, le deuxième terme de démodulation étant égal à la différence entre la somme des cinquième et huitième mesures et la somme des sixième et septième mesures.

Selon un mode de mise en œuvre, la première série de mesures et la deuxième série de mesures sont réalisées en des points du signal de sortie qui correspondent à des états de modulation distincts.

Cela permet avantageusement d'ajuster, par des choix appropriés d'états de modulation, les écarts de valeurs entre la première série de mesures et la deuxième série de mesures.

Selon un mode de mise en œuvre, la modulation de phase à au moins deux états est appliquée selon une période égale au double du temps de parcours des signaux contra-propagatifs dans la boucle optique divisé par une valeur choisie parmi les nombres entiers positifs impairs.

En d'autres termes, la modulation de phase des deux signaux contra-propagatifs se fait à la fréquence propre de la bobine de fibre optique, ou à un multiple entier impair de la fréquence propre. Une modulation à la fréquence propre de la bobine permet de limiter la déformation des créneaux et le risque de couplage électromagnétique dans les cartes électroniques du dispositif de mesure interférométrique.

Selon un mode de mise en œuvre, la première valeur de puissance d'entrée et la deuxième valeur de puissance d'entrée sont choisies de telle manière que les premières valeurs de puissance de sortie sont supérieures aux deuxièmes valeurs de puissance de sortie. Par exemple, la première valeur de puissance d'entrée est supérieure à la deuxième valeur de puissance d'entrée, par exemple 10 fois supérieure.

On améliore ainsi la précision de la mesure. En effet, la mesure de la rotation est fortement sensible au bruit et la mesure du Kerr l'est très peu car elle peut se faire sur un temps long. Il est donc avantageux de faire la première détermination de déphasage, représentative notamment de la rotation, sur le niveau de puissance ayant le meilleur rapport signal à bruit, et la deuxième détermination de déphasage, représentative uniquement du Kerr, sur le niveau de puissance ayant le moins bon rapport signal à bruit.

Selon un mode de mise en œuvre, l'ajustement du rapport des puissances moyennes des deux signaux contra-propagatifs comporte un contrôle électro-optique par une polarisation en tension du séparateur.

Selon un mode de mise en œuvre, le procédé comporte une étape de modulation de la puissance du signal lumineux périodique d'entrée par un signal de commande de modulation de puissance optique d'entrée de type carré ou créneau dont le rapport cyclique est inférieur ou égal à 50%, de façon que le signal lumineux périodique d'entrée modulé présente :

- en un premier point du signal périodique d'entrée, une première valeur de puissance d'entrée égale au produit de la puissance moyenne du signal périodique d'entrée par un gain compris entre 1,6 et 2,4,
- en un deuxième point du signal périodique d'entrée, une deuxième valeur de puissance d'entrée non nulle et différente de la première valeur de puissance d'entrée.

En d'autres termes, un signal ainsi modulé en puissance permet d'annuler le terme $(P_M - \alpha <P>)$ de l'équation du déphasage $\Delta\varphi k$ mentionnée ci-avant ; il peut donc être transmis dans tout interféromètre de Sagnac, en particulier dans le gyromètre à fibre optique selon l'invention, sans générer d'effet Kerr ou en générant un effet Kerr négligeable. Une telle modulation de puissance du signal d'entrée contribue donc à une mesure interférométrique non faussée ou très peu faussée par l'effet Kerr.

Ce procédé de modulation en puissance du signal lumineux d'entrée est décrit plus en détail dans la demande de brevet déposée le même jour que la présente demande sous le titre *« Générateur d'un signal lumineux modulé anti-effet Kerr, dispositif de* mesure *interférométrique comportant un tel générateur et méthode de modulation d'un signal lumineux ».*

Selon un mode de mise en œuvre, le signal de commande de modulation de la puissance optique d'entrée présente un rapport cyclique strictement inférieur à 50%.

Selon un mode de mise en œuvre, la première valeur de puissance d'entrée est supérieure à la deuxième valeur de puissance d'entrée.

Selon un autre aspect, il est proposé un dispositif de mesure interférométrique configuré pour mettre en œuvre la méthode selon l'invention.

Selon un mode de réalisation, le dispositif est un gyromètre à fibre optique.

Les différentes caractéristiques, variantes et formes de réalisation de l'invention peuvent être associées les unes avec les autres selon diverses combinaisons dans la mesure où elles ne sont pas incompatibles ou exclusives les unes des autres.

**Brève description des figures**

Diverses autres caractéristiques de l'invention ressortent de la description annexée effectuée en référence aux dessins qui illustrent des formes, non limitatives, de réalisation de l'invention et où :

la figure 1 illustre un gyromètre à fibre optique selon l'invention,

la figure 2 est un chronogramme représentant l'évolution de la puissance du signal lumineux d'entrée du gyromètre de la figure 1,

la figure 3 illustre une étape d'un mode de mise en œuvre du procédé selon l'invention,

la figure 4 illustre une autre étape du mode de mise en œuvre de la figure 3,

la figure 5 illustre une synthèse des étapes des figures 3 et 4,

la figure 6 illustre une étape d'un autre mode de mise en œuvre du procédé selon l'invention,

la figure 7 illustre une autre étape du mode de mise en œuvre de la figure 6,

la figure 8 illustre une synthèse des étapes des figures 6 et 7,

la figure 9 illustre une étape d'un autre mode de mise en œuvre du procédé selon l'invention,

la figure 10 illustre une autre étape du mode de mise en œuvre de la figure 9,

la figure 11 illustre une synthèse des étapes des figures 9 et 10.

Il est à noter que sur ces figures les éléments structurels et/ou fonctionnels communs aux différentes variantes peuvent présenter les mêmes références.

Diverses autres modifications peuvent être apportées à l'invention dans le cadre des revendications annexées.

**Description détaillée**

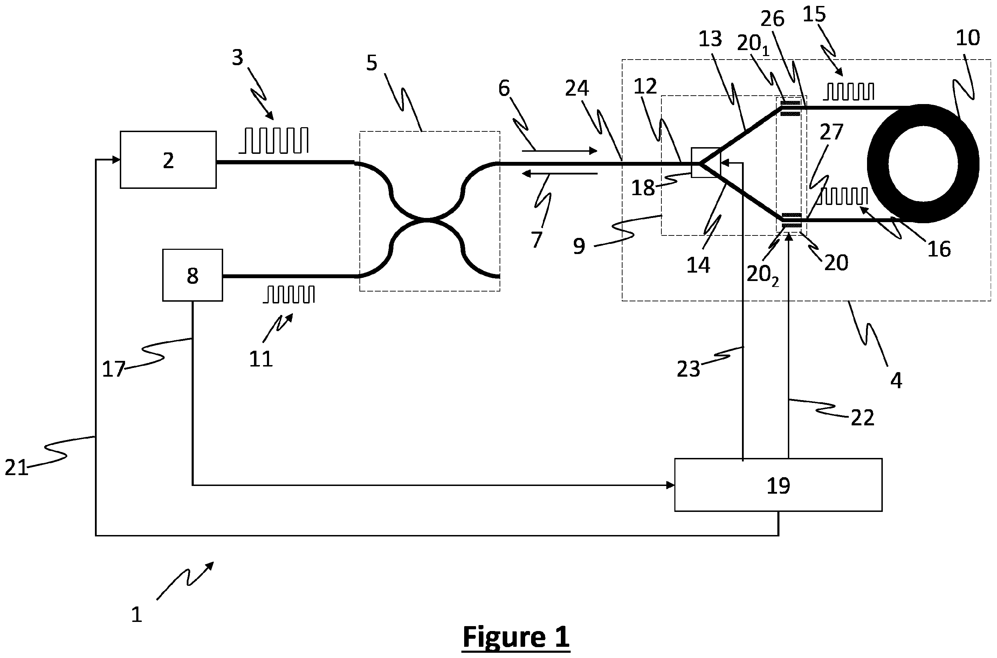

Le gyromètre 1 à fibre optique représenté sur la figure 1 comporte un générateur de signal lumineux 2, un interféromètre de Sagnac 4, un module de transmission optique 5 et des moyens de commande centralisés 19.

Les moyens de commande centralisés 19 comportent par exemple une carte électronique comportant un micro-processeur, un ou plusieurs convertisseurs analogiques/numériques et une mémoire et sont configurés pour commander les différents éléments du gyromètre de façon synchronisée.

Le module de transmission optique 5 est configuré pour coupler optiquement, dans un sens aller 6, le générateur de signal lumineux 2 à l'interféromètre de Sagnac 4 et, dans un sens retour 7, l'interféromètre de Sagnac 4 à un module de mesure 8. Ici, le module de transmission optique est un coupleur optique ; il peut donc engendrer une atténuation de puissance optique transmise, par exemple une division par deux de la puissance optique transmise. Cette atténuation éventuelle n'influe pas sur le fonctionnement de l'invention, qui est compatible avec tout type de module de transmission optique engendrant ou non une atténuation de la puissance optique transmise. Dans certains modes de réalisation, le module de transmission optique est un circulateur optique.

Dans le mode de réalisation illustré, le générateur de signal lumineux 2 est configuré pour générer un signal lumineux d'entrée 3 et comporte une diode laser intégrée réalisée à base de matériaux semi-conducteurs, par exemple ici une diode laser intégrée de type DFB (« Distributed FeedBack laser», en langue anglaise). Toutefois, l'invention est compatible avec tout générateur de signal lumineux.

Le générateur de signal lumineux 2 est ici commandé par les moyens de commande centralisés 19 de façon que le signal lumineux d'entrée 3 soit périodique et présente au moins une première valeur de puissance d'entrée et une deuxième valeur de puissance d'entrée non nulles.

Ici, les moyens de commande centralisés 19 commandent le générateur 2 par l'intermédiaire d'un premier signal de commande 21, et sont ici configurés pour moduler la puissance d'alimentation du générateur de signal lumineux 2, par exemple ici en réalisant une modulation de puissance à deux états de façon que le signal lumineux 3 soit un signal carré, ou en créneau, présentant la première valeur de puissance d'entrée non nulle et la deuxième valeur de puissance d'entrée non nulle. Dans cet exemple, la première valeur de puissance d'entrée est supérieure à la deuxième valeur de puissance d'entrée. En variante, le générateur de signal lumineux 2 peut comporter un modulateur de puissance électro-optique situé en aval de la diode laser relativement au sens de propagation du signal lumineux d'entrée 3, les moyens de commande centralisés 19 étant alors configurés pour commander le modulateur électro-optique. Par exemple un tel modulateur électro-optique peut être de type Mach Zehnder.

L'interféromètre de Sagnac 4 comporte un port d'entrée/sortie 24, un séparateur optique 9 et une boucle optique 10.

Le port d'entrée/sortie 24 est configuré pour recevoir, dans le sens aller 6, le signal lumineux d'entrée 3 (éventuellement atténué par le module de transmission optique 5, comme mentionné précédemment), et délivrer, dans le sens retour 7, un signal lumineux de sortie 11.

La boucle 10 de fibre optique est formée ici par une bobine de fibre optique d'une longueur de 400 mètres et d'un diamètre moyen de 70 millimètres.

Le séparateur optique 9 comporte un bras principal 12 couplé d'une part au port d'entrée/sortie 24 et se divisant, d'autre part, en un premier bras 13 couplé à une première extrémité 26 de la fibre optique et en un deuxième bras 14 couplé à une deuxième extrémité 27 de la fibre optique. Ainsi l'interféromètre de Sagnac est configuré pour recevoir le signal lumineux 3 et pour le diviser en un premier signal contra-propagatif 15 circulant depuis le premier bras 13 dans la boucle de fibre optique 10 et en un deuxième signal contra-propagatif 16 circulant depuis le deuxième bras 14 dans la boucle de fibre optique 10. Chaque sens de propagation forme une voie de l'interféromètre de Sagnac.

Il convient de noter ici que dans le domaine des mesures interférométriques, il est classique de définir un sens de propagation de référence dans la boucle optique. Dans un tel cas, on parle alors d'un signal co-propagatif, c'est-à-dire se propageant dans le sens de référence, et d'un signal contra-propagatif se propageant dans le sens contraire. A des fins de simplification, aucun sens de référence n'a été défini ici et les deux signaux sont considérés être contra-propagatifs l'un par rapport à l'autre.

Le séparateur optique 9 est ici réalisé au sein d'un circuit électro-optique intégré réalisé sur un substrat de niobate de lithium. Le circuit électro-optique comporte en outre un circuit de contrôle 18 permettant d'ajuster l'équilibrage des voies de l'interféromètre 4, c'est à dire le rapport des puissances optiques transmises vers le premier bras 13 et vers le deuxième bras 14. Par exemple ici, le circuit de contrôle 18 comporte une électrode commandée par les moyens de commande centralisés 19. Un tel circuit est notamment décrit dans l'article « Modulateur d'intensité LiNbO3 à fort taux d'extinction, N Grossard, B Pedrono, J Hauden, H Porte - JNOG, ME7, 2007 » .

Ici, un modulateur de phase 20 est configuré pour moduler le déphasage entre les deux signaux contra-propagatifs 15 et 16. Par exemple ici, le modulateur de phase comporte deux paires d'électrodes $20_1$, $20_2$, chacune placée sur un bras distinct 13 et 14 du séparateur optique 9. Dans ce mode de réalisation, le modulateur de phase 20 est commandé par un deuxième signal de commande 22 délivré par les moyens de commande centralisés 19.

Bien que le séparateur 9 soit théoriquement prévu pour coupler 50% de la puissance optique vers le premier bras 15 et 50% de la puissance optique vers le deuxième bras 16, le couplage effectif diffère ici de 50%, notamment en raison des couplages des extrémité 26 et 27 de la fibre optique aux bras 13 et 14 du séparateur et en raison des imperfections du séparateur 9.

Ainsi les signaux contra-propagatifs 15, 16 qui circulent dans la bobine présentent des puissances légèrement différentes. Toutefois, puisque les deux chemins parcourus par les signaux 15 et 16 sont réciproques, les pertes sont équivalentes pour chaque chemin complet.

Les signaux contra-propagatifs 15 et 16 présentent ici des valeurs de puissance correspondant aux valeurs de puissance d'entrée. Par exemple ici, ils comprennent chacun une première valeur de puissance correspondant à la première valeur de puissance d'entrée et une deuxième valeur de puissance correspondant à la deuxième valeur de puissance d'entrée. La première valeur de puissance de chaque signal contra-propagatif 15, 16 est donc supérieure à sa deuxième valeur de puissance. En outre, en raison de l'imperfection du couplage mentionnée précédemment, les premières valeurs de puissance des deux signaux contra-propagatifs sont différentes, et les deuxièmes valeurs de puissance des deux signaux contra-propagatifs 15, 16 sont différentes.

L'interféromètre de Sagnac 4 est configuré pour qu'une rotation du gyromètre 1 dans un plan orthogonal à l'axe de la bobine, ici le plan de la figure 1, engendre un déphasage entre les signaux contra-propagatifs 15 et 16 qui se propagent dans la boucle 10.

Les deux signaux contra-propagatifs 15 et 16 se recombinent de façon à former le signal lumineux de sortie 11 qui est transmis dans le sens retour 7 par le port d'entrée/sortie 24 au module de mesure 8 via le module de transmission optique 5. Au moment de leur combinaison, après avoir parcouru des chemins optiques réciproques, chacun des signaux contra-propagatifs 15, 16 présente une réduction de puissance équivalente.

Le module de mesure 8 est configuré pour mesurer la puissance instantanée du signal lumineux de sortie 11, ou puissance de sortie Ps, qui est fonction du déphasage entre les deux signaux contra-propagatifs 15, 16. Par exemple, le module de mesure 8 comporte une photodiode intégrée configurée pour délivrer aux moyens de commande centralisés 19 un signal électrique de mesure 17 représentatif de la puissance de sortie Ps.

Le signal lumineux de sortie 11 présente des premières valeurs de puissance de sortie correspondant à la première valeur de puissance d'entrée et des deuxièmes valeurs de puissance de sortie correspondant à la deuxième valeur de puissance d'entrée. Les différences entre les différentes premières valeurs et les différences entre les différentes deuxièmes valeurs dépendent notamment des valeurs de déphasage entre les deux signaux contra-propagatifs 15, 16. Ici, la première valeur de puissance d'entrée est supérieure à la deuxième valeur de puissance d'entrée et les premières valeurs de puissance de sortie sont supérieures aux deuxièmes valeurs de puissance de sortie.

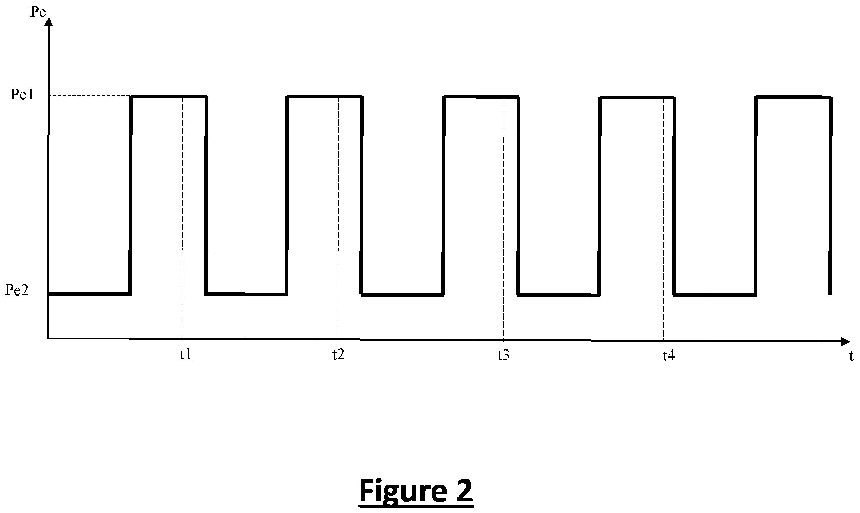

La figure 2 est un chronogramme illustrant l'évolution de la puissance instantanée d'entrée Pe du signal lumineux d'entrée 3. Ici, le signal lumineux d'entrée 3 présente une forme en créneau et présente la première valeur de puissance instantanée d'entrée Pe1 non nulle et la deuxième valeur de puissance instantanée d'entrée Pe2 non nulle, ici inférieure à la première valeur de puissance instantanée d'entrée Pe1. Par exemple, la première valeur Pe1 est égale à 8 mW et la deuxième valeur de puissance Pe2 est égale à 1 mW.

Il convient de noter ici que selon l'architecture du générateur de signal lumineux 2, des matériaux employés et les conditions dans lesquelles la source est mise en œuvre, le signal lumineux d'entrée 3 peut être substantiellement déformé par rapport à sa commande de modulation. A des fins de simplification de l'exposé, les caractéristiques du signal lumineux d'entrée 3 décrites ici, notamment sa forme en carré et son rapport cyclique, correspondent au cas idéal dans lequel le signal lumineux d'entrée ne subit aucune déformation, et correspondent aux caractéristiques de la commande de la modulation.

Le procédé selon l'invention comporte une modulation périodique du déphasage entre les deux signaux contra-propagatifs 15, 16 et, sur une même période de modulation du déphasage, une première série de mesures en des points du signal de sortie présentant les premières valeurs de puissance de sortie (qui correspondent à la première valeur de puissance d'entrée), et une deuxième série de mesures en des points du signal de sortie présentant les deuxième valeurs de puissance de sortie (qui correspondent à la deuxième valeur de puissance d'entrée). Ici, la première valeur de puissance d'entrée est un niveau haut et la deuxième valeur de puissance d'entrée est un niveau bas.

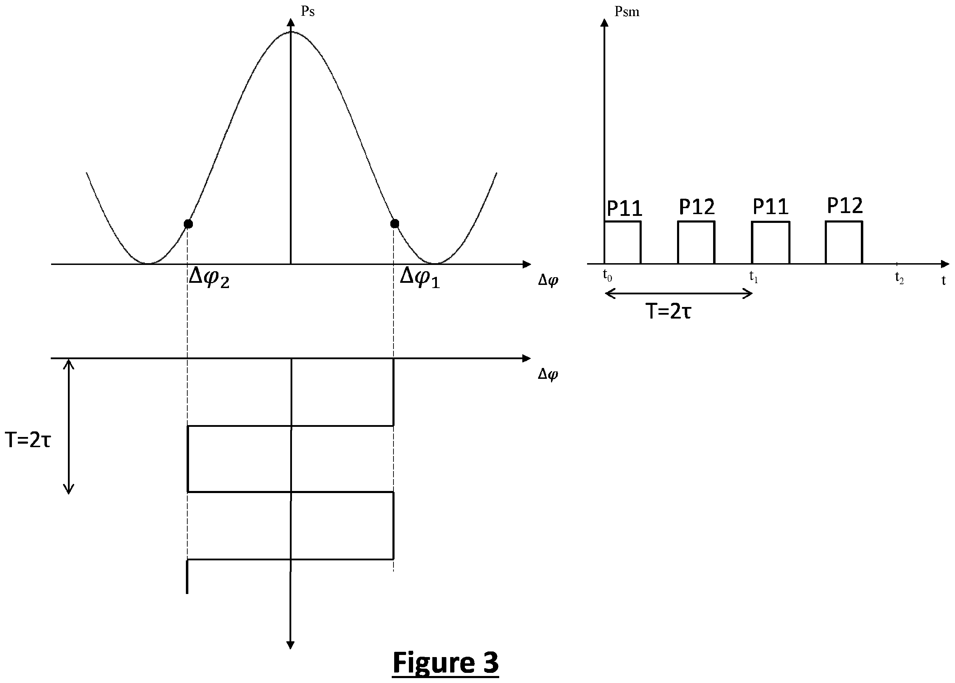

Les figures 3 à 5 illustrent un mode de mise en œuvre du procédé selon l'invention dans lequel la modulation du déphasage entre les signaux contra-propagatifs 15, 16 est une modulation à deux états et dans lequel chaque série de mesures comporte deux mesures. Ici, chaque mesure d'une série se fait en un point du signal de sortie correspondant à un état distinct de la modulation, on parle donc ici de modulation à deux états par valeur de puissance d'entrée. Ici, chaque état de modulation est utilisé pour la réalisation d'une mesure de chaque série de mesures.

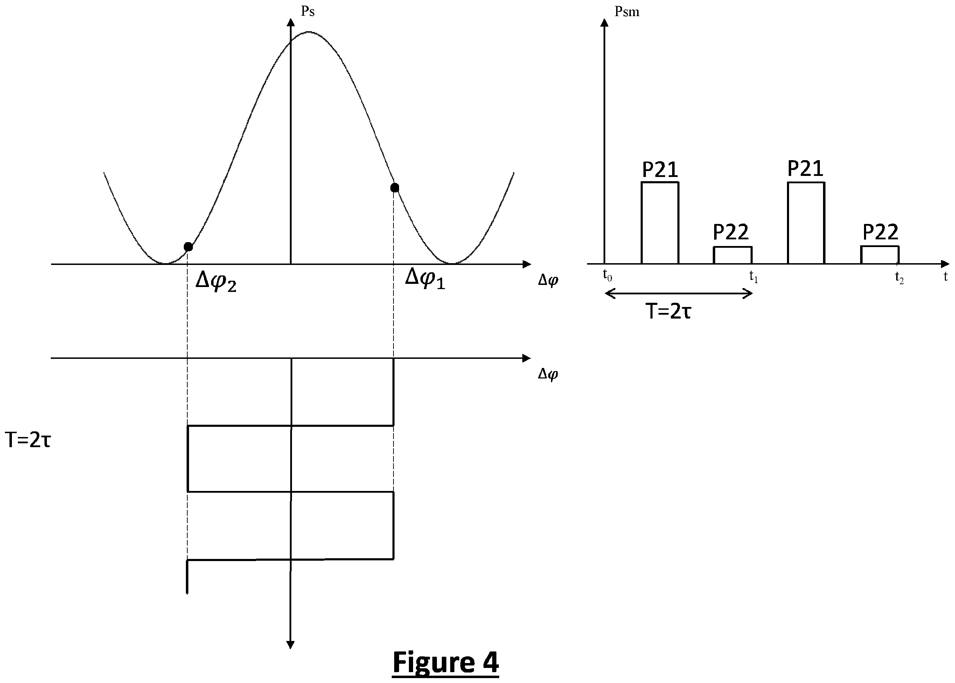

A des fins de clarté de l'exposé, les figures 3 et 4 représentent chacune indépendamment le traitement sur des valeurs de puissance de sortie correspondant à une valeur distincte de puissance d'entrée. En d'autres termes, les figures 3 et 4 représentent indépendamment le traitement sur les premières valeurs de puissance de sortie et sur les deuxièmes valeurs de puissance de sortie.

Sur la figure 3, on a représenté respectivement : en bas à gauche, la modulation du déphasage Δφ entre les signaux contra-propagatifs 15, 16 par le modulateur de phase 20 en fonction du temps t ; en haut à gauche est représenté l'interférogramme du signal de sortie, c'est à dire la puissance de sortie Ps en fonction de la modulation du déphasage Δφ appliquée par le modulateur de phase; en haut à droite, les valeurs de puissance de sortie mesurées Psm en fonction du temps t, mesurées ici par le module de mesure 8 lors de la première série de mesures.

La modulation est ici une modulation de phase périodique à deux états opposés, appliquée sur une période de modulation T égale à deux fois le temps de propagation $\tau$ des signaux contra-propagatifs 15 et 16 dans la bobine 10, c'est-à-dire appliquée à la fréquence propre de la bobine. Les deux états sont les suivants : un premier état de modulation $\Delta\varphi1 = \pi - k$ ; un deuxième état de modulation $\Delta\varphi2 = -\pi + k$. Dans l'exemple illustré sur les figures 3 et 4, $k = \pi/8$, et les deux états de modulation sont les suivants : $\Delta\varphi1 = 7\pi/8$ ; $\Delta\varphi2 = -7\pi/8$.

Les figures 3 et 4 illustrent la mise en œuvre du procédé sur une première période de modulation s'étendant entre un premier instant t0 et un deuxième instant t1, et sur une deuxième période de modulation s'étendant entre le deuxième instant t1 et un troisième instant t2.

Le modulateur de phase 20 ajuste la modulation en ajoutant aux deux états de modulation $\Delta\varphi1$, $\Delta\varphi2$ une rampe de phase numérique de contre-réaction (non représentée sur la figure 3). Les marches de cette rampe numérique, de durée $\tau$, annulent le déphasage entre les signaux contra-propagatifs 15 et 16, engendré ici par la rotation du gyromètre 1 et par l'effet Kerr. Ainsi, l'interférogramme est recentré sur la valeur 0 comme représenté dans la figure 3. On parle alors d'un schéma en boucle fermée dans la mesure de la rotation.

La première série de mesures est représentée en haut à droite de la figure 3 et comporte deux mesures P11 et P12 de la puissance de sortie Ps échantillonnées sur chaque période de modulation. Les deux mesures P11 et P12 sont réalisées en des points du signal de sortie 11 qui présentent les premières valeurs de puissance de sortie (liées à la première valeur de puissance d'entrée) et respectivement au premier état de modulation $\Delta\varphi1$ et au deuxième état de modulation $\Delta\varphi2$. Les valeurs des deux mesures de puissance P11, P12 sont représentées par des points sur la courbe représentant la puissance de sortie Ps en fonction de la modulation du déphasage Δφ.

La différence de phase entre les deux signaux contra-propagatifs 15, 16 est liée à un premier terme de démodulation D1 déterminé par les moyens de commande centralisés 19 à partir du signal électrique de mesure 17, ici selon l'expression suivante :

[Math 1]

$$D1 = P11 - P12$$

Ainsi en asservissant la valeur de la rampe de phase numérique de contre-réaction sur l'annulation du premier terme de démodulation D1, on connaît, par la lecture de la valeur de la rampe de phase nécessaire à cette annulation, le déphasage engendré par la rotation. Par exemple à cette fin, les moyens de commande centralisés 19 comportent une première boucle d'asservissement configurée pour asservir la rampe de phase sur l'annulation du premier terme de démodulation D1 et égaliser de ce fait les deux valeurs mesurées P11 et P12.

La figure 4, de présentation analogue à la figure 3, illustre la réalisation de la deuxième série de mesures, ici deux mesures de puissance P21 et P22 échantillonnées sur chaque période de modulation, en particulier ici sur les première et deuxième périodes de modulation. Les deux mesures P21 et P22 correspondent aux deuxièmes valeurs de puissance de sortie (liées à la deuxième valeur de puissance d'entrée) et respectivement au premier état de modulation $\Delta\varphi1$ et au deuxième état de modulation $\Delta\varphi2$. Pour cette deuxième série de mesures, la modulation du déphasage $\Delta\varphi$ entre les deux signaux contra-propagatifs est identique à ce qui a été décrit précédemment en lien avec la figure 3.

Il convient de noter ici que sur les figures 3 et 4, les repères en haut à droite ne présentent pas la même échelle. En effet, la première série de mesures étant réalisée sur un état haut, la valeur d'origine du repère de la figure 3 est nettement supérieur à la valeur d'origine du repère de la figure 4.

Malgré l'application de la rampe de phase, la courbe en haut à gauche sur la figure 4 n'est pas centrée sur l'origine du repère et les valeurs de puissance de sortie mesurées P21 et P22 diffèrent. Cette différence dans les mesures P21 et P22 indique qu'il subsiste un déphasage entre les deux signaux contra-propagatifs 15 et 16.

Ce déphasage n'est pas dû à la rotation dont l'effet sur l'interférogramme est compensé par la rampe de phase, mais à la différence entre le déphasage lié à l'effet Kerr produit par les signaux contra- propagatif présentant des valeurs de puissance qui correspondent à la première valeur de puissance d'entrée (compensé précédemment) et le déphasage lié à l'effet Kerr produit par les signaux contra-propagatifs présentant des valeurs de puissance qui correspondent à la deuxième valeur de puissance d'entrée.

Le déphasage entre les deux signaux contra-propagatifs 15, 16 peut être déterminé par un deuxième terme de démodulation D2, ici non nul, calculé par les moyens de commande centralisée 19. Ici, le deuxième terme de démodulation D2 est calculée de la façon suivante

[Math. 2]

$$D2 = P21 - P22$$

Les moyens de commande centralisés 19, après avoir calculé le deuxième terme de démodulation D2 délivrent un troisième signal de commande 23 au circuit de contrôle 18. L'équilibrage des puissances dans les voies de l'interféromètre 4 dépend de la valeur du troisième signal de commande 23 et l'équilibrage des voies de l'interféromètre est ici ajusté de façon à compenser l'effet Kerr, c'est-à-dire ici de façon que les valeurs de puissance de sortie correspondante à la deuxième série de mesures soient égales. Par exemple, les moyens de commande centralisée 19 comportent une deuxième boucle d'asservissement, configurée pour asservir le rapport des puissances depuis le premier bras 13 et depuis le deuxième bras 14 sur l'annulation du deuxième terme de démodulation D2. Ce second terme de démodulation n'agit cependant pas sur la rampe de phase, celle-ci n'étant asservie que par le premier terme de démodulation D1.

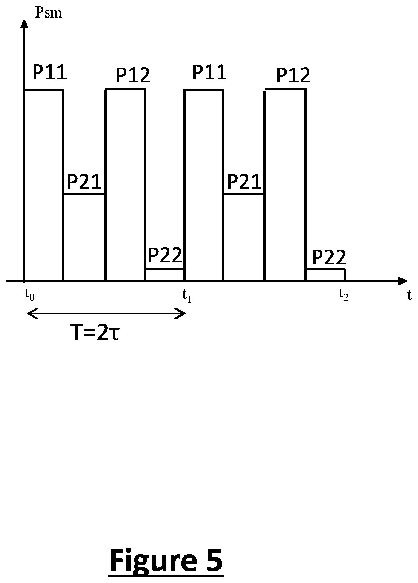

La figure 5 illustre l'ensemble des puissances de sortie mesurées P11, P12, P21, P22 en fonction du temps lors de la mise en œuvre du mode de réalisation illustré par les figures 3 et 4 entre les instants $t_0$ et $t_2$.

Ainsi pour chaque état du signal de commande de modulation, on réalise de façon indépendante deux mesures sur des valeurs de puissances correspondant aux deux valeurs de puissance en entrée. En d'autres termes, la mesure sur les première valeurs de puissance de sortie liées à la première puissance d'entrée n'interfère pas avec la mesure sur les deuxième valeurs de puissance liées à la deuxième puissance d'entrée.

Le procédé selon l'invention est avantageusement compatible avec une modulation présentant un nombre d'états opposés deux à deux différent, par exemple quatre états de modulation.

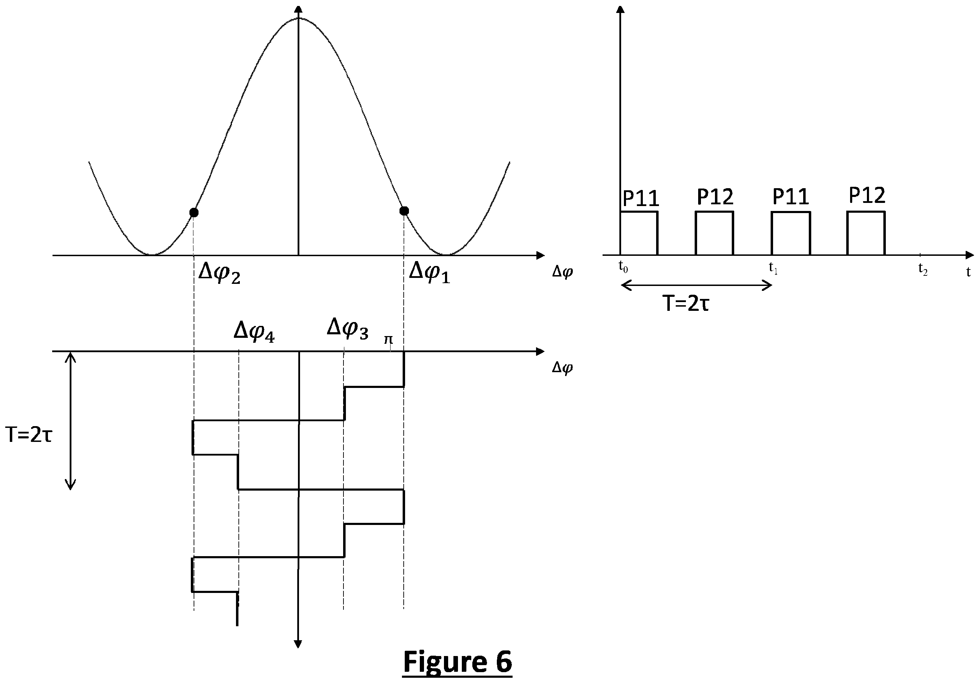

Les figures 6 à 8 illustrent un mode de mise en œuvre de l'invention dans lequel la modulation du déphasage entre les signaux contra-propagatifs 15 et 16 est une modulation à quatre états et dans lequel chaque série de mesures comporte deux mesures. En particulier, la première série de mesures et la deuxième série de mesures sont ici effectuées sur des états de modulation distincts. Ainsi, chaque état de modulation est utilisé pour une seule mesure. On parle ici de modulation à deux états par valeur de puissance d'entrée.

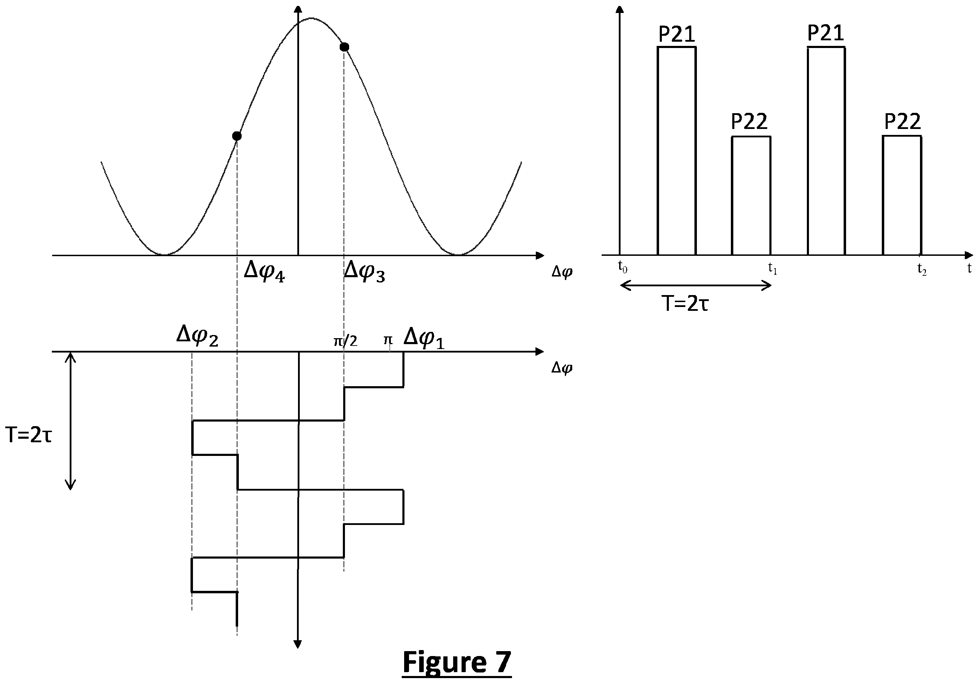

Les figures 6 et 7 illustrent la mise en œuvre du procédé sur la première période de modulation s'étendant entre le premier instant t0 et le deuxième instant t1, et sur la deuxième période de modulation s'étendant entre le deuxième instant t1 et le troisième instant t2 et représentent chacune indépendamment le traitement sur une valeur distincte de puissance d'entrée. La figure 6 a trait en particulier à la première série de mesures et la figure 7 a trait en particulier à la deuxième série de mesures.

La modulation est ici une modulation à quatre états opposés deux à deux, appliquée ici à la fréquence propre de la bobine. Les quatre états sont ici les suivants : un premier état de modulation $\Delta\varphi1= \pi - k$ ; un deuxième état de modulation $\Delta\varphi2=-\pi + k$ ; un troisième état de modulation $\Delta\varphi3= \pi - \beta$ ; un quatrième état de modulation $\Delta\varphi4= -\pi + \beta$ . Dans l'exemple illustré sur les figures 6 et 7, $k = \pi/8$, $\beta=\pi/2$ et les quatre états de modulation sont les suivants : $\Delta\varphi1=7\pi/8$ ; $\Delta\varphi2=-7\pi/8$; $\Delta\varphi3=\pi/2$ ; $\Delta\varphi4=-\pi/2$.

Le modulateur de phase 20 ajuste la modulation en ajoutant aux quatre états de modulation une rampe de phase numérique de contre-réaction (non représentée sur la figure 3). Les marches de cette rampe numérique, de durée $\tau$, annulent (ou compensent) le déphasage entre les signaux contra-propagatifs 15 et 16 engendré ici par la rotation du gyromètre 1 et par l'effet Kerr produit par les signaux contra-propagatifs présentant des valeurs de puissance qui correspondent à la première valeur de puissance d'entrée.

En haut à droite de la figure 6 sont illustrées les deux mesures P11 et P12 de la première série de mesures de la puissance de sortie Ps échantillonnées sur chaque période de modulation. Le deux mesures P11 et P12 sont réalisées en des points du signal de sortie qui correspondent aux premières valeurs de puissance de sortie (liées à la première valeur de puissance d'entrée) et respectivement au premier état de modulation $\Delta\varphi1$ et au deuxième état de modulation $\Delta\varphi2$. Les valeurs des deux mesures de puissance P11, P12 sont représentées par des points sur la courbe représentant la puissance de sortie Ps en fonction de la modulation du déphasage $\Delta\varphi$. Les deux mesures P11 et P12 sont échantillonnées sur chaque période de modulation.

Ici, la rampe de phase est asservie sur le premier terme de modulation D1 calculé de la même manière que ce qui a été décrit précédemment.

En haut à droite sur la figure 7 sont illustrées les deux mesures de puissance de sortie P21 et P22 de la deuxième série de mesures. Les deux mesures P21 et P22 sont réalisées en des points du signal de sortie 11 qui correspondent aux deuxièmes valeurs de puissance de sortie (liées à la deuxième valeur de puissance d'entrée) et respectivement au troisième état de modulation $\Delta\varphi3$ et au quatrième état de modulation $\Delta\varphi4$. Les valeurs des deux mesures de puissance P21, P22 sont représentées par des points sur la courbe représentant la puissance de sortie Ps en fonction de la modulation du déphasage $\Delta\varphi$. Les deux mesures P21 et P22 sont ici échantillonnées sur chaque période de modulation.

On observe que puisque les deuxième et troisième déphasage $\Delta\varphi3$, $\Delta\varphi4$ présentent des valeurs différentes des premier et deuxième déphasage $\Delta\varphi1$, $\Delta\varphi2$, notamment ici des valeurs plus faibles, la troisième mesure et la quatrième mesure présentent des valeurs plus élevées. Ainsi, les écarts de valeurs entre la première série de mesures et la deuxième série de mesures sont avantageusement réduits.

En outre, puisque le troisième état de déphasage $\Delta\varphi3$ et quatrième état de déphasage $\Delta\varphi4$ sont opposés, la différence entre les mesures P21 et P22 de la deuxième série de mesures permet comme précédemment d'asservir l'équilibrage des puissances dans les voies de l'interféromètre 4 sur l'annulation du deuxième terme de démodulation D2.

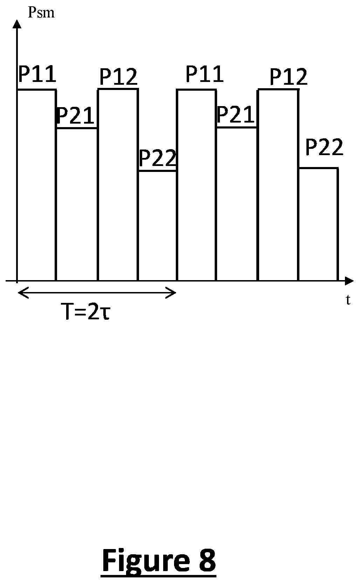

La figure 8 illustre l'ensemble des puissances de sortie mesurées P11, P12, P21 et P22 en fonction du temps lors de la mise en œuvre du mode de réalisation illustré par les figures 6 et 7 entre les instants $t_0$ et $t_2$. On observe que les écarts de puissance mesurées entre la première série de mesures et la deuxième série de mesures sont avantageusement réduits par rapport aux écarts du mode de réalisation précédent illustré notamment par la figure 5.

Le procédé selon l'invention est compatible avec une modulation à plus de deux états comportant deux séries de mesures réalisées sur les mêmes états de modulation.

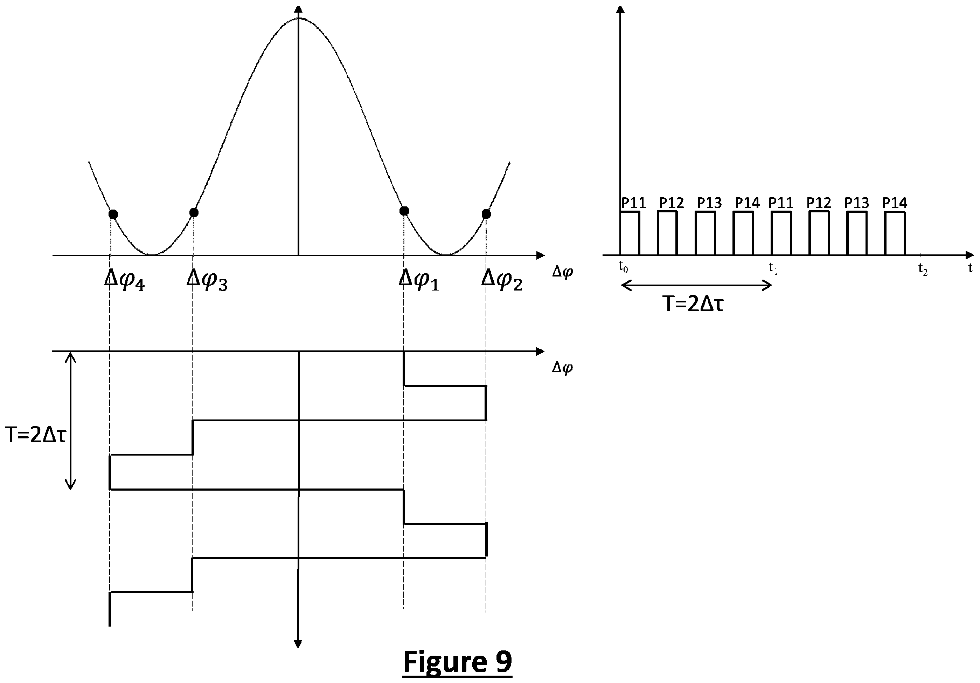

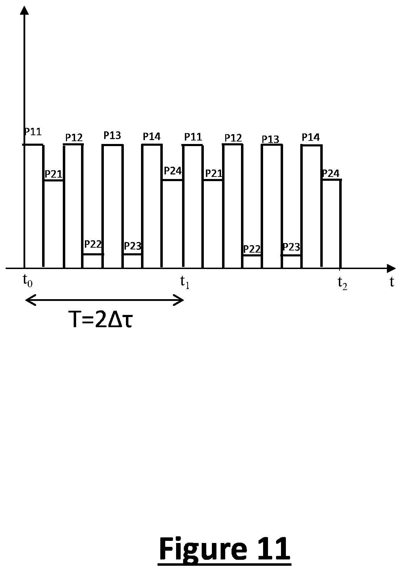

Les figures 9 à 11 illustrent un mode de mise en œuvre du procédé selon l'invention dans lequel la modulation du déphasage entre les signaux contra-propagatifs 15, 16 est une modulation à quatre états et dans lequel chaque série de mesures comporte quatre mesures. Ici, chaque mesure d'une série se fait en un point du signal de sortie correspondant à un état distinct de la modulation, on parle donc ici de modulation à quatre états par valeur de puissance d'entrée.

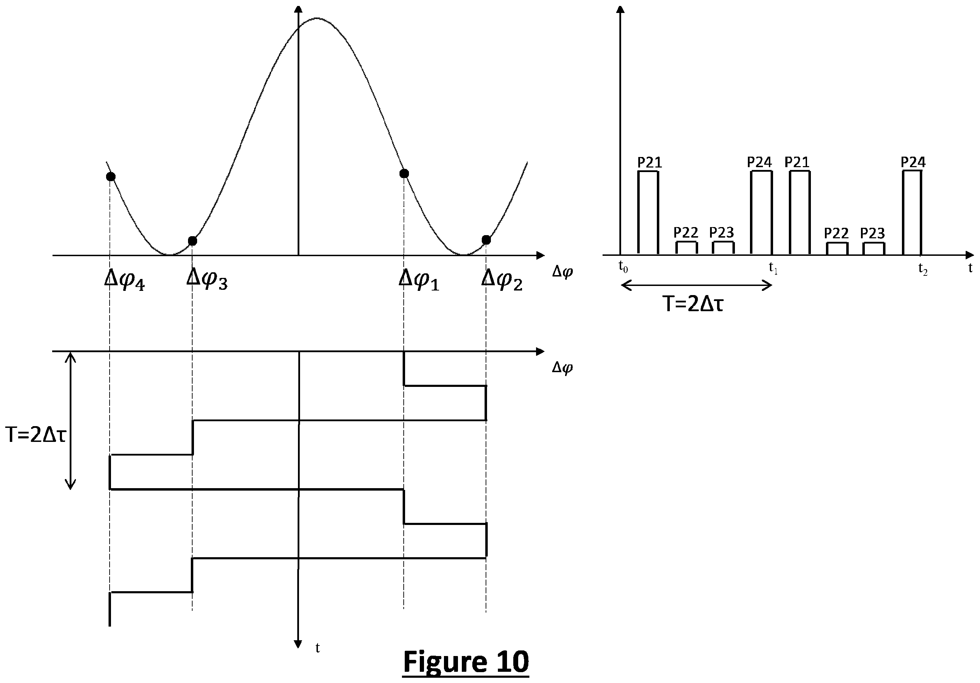

Les figures 9 à 11 illustrent la mise en œuvre du procédé sur la première période de modulation s'étendant entre le premier instant t0 et le deuxième instant t1, et sur la deuxième période de modulation s'étendant entre le deuxième instant t1 et le troisième instant t2 et représentent chacune indépendamment le traitement sur des valeurs de puissance de sortie correspondant à des valeurs distinctes de puissance d'entrée. La figure 9 a trait en particulier à la première série de mesures et la figure 10 a trait en particulier à la deuxième série de mesures.

La modulation à quatre états est ici appliquée à la fréquence propre de la bobine. Les quatre états sont les suivants : un premier état de modulation $\Delta\varphi1= \pi - k$ ; un deuxième état de modulation $\Delta\varphi2= \pi + k$ ; un troisième état de modulation $\Delta\varphi3= -\pi + k$ ; un quatrième état de modulation $\Delta\varphi4= -\pi - k$ . Dans l'exemple illustré sur les figures 9 et 10, $k = \pi/8$, et les quatre états de modulation sont les suivantes : $\Delta\varphi1=7\pi/8$ ; $\Delta\varphi2=9\pi/8$ ; $\Delta\varphi3=-7\pi/8$ ; $\Delta\varphi4=-9\pi/8$.

Le modulateur de phase 20 ajuste la modulation en ajoutant aux quatre états de modulation une rampe de phase numérique de contre-réaction (non représentée sur la figure 3). Les marches de cette rampe numérique, de durée $\tau$, annulent le déphasage entre les signaux contra-propagatifs 15 et 16, engendré ici par la rotation du gyromètre 1 et par l'effet Kerr produit par les signaux contra-propagatifs présentant des valeurs de puissance qui correspondent à la première valeur de puissance d'entrée.

En haut à droite sont représentées sur la figure 9 les quatre mesures P11, P12, P13, P14 de la première série de mesures de la puissance de sortie Ps, ici échantillonnées sur chaque période de modulation. Les quatre mesures sont réalisées en des points du signal de sortie 11 qui correspondent aux premières valeurs de puissance de sortie (liées à la première valeur de puissance d'entrée) et respectivement au premier, deuxième, troisième et quatrième état de modulation $\Delta\varphi1$, $\Delta\varphi2$, $\Delta\varphi3$ et $\Delta\varphi4$. Les valeurs des quatre mesures de puissance P11 à P14 sont représentées par des points sur la courbe représentant la puissance de sortie Ps en fonction de la modulation du déphasage $\Delta\varphi$.

Dans ce mode de mise en œuvre à quatre états de modulation et quatre mesures par séries de mesure, le premier terme de démodulation est déterminé selon l'expression suivante :

[Math 3]

$$D1 = P11 - P12 - P13 + P14$$

En outre, ce mode de réalisation permet avantageusement le calcul d'un troisième terme de démodulation qui permet d'ajuster le facteur d'échelle du déphasage, plus connu sous le terme $V\pi$. Le troisième terme de démodulation s'obtient par l'expression suivante

[Math 4]

$$D3 = P11 - P12 + P13 - P14$$

A des fins de simplification de l'exposé, l'ajustement du $V\pi$ ne sera pas décrit ici et le $V\pi$ sera considéré être à la bonne valeur.

La figure 10 illustre la réalisation de la deuxième série de mesures, qui comporte ici quatre mesures de puissance P21, P22, P23 et P24, réalisées en des points du signal de sortie 11 qui correspondent aux deuxièmes valeurs de puissance de sortie (liées à la deuxième valeur de puissance d'entrée) du signal de sortie 11 et qui correspondent respectivement au premier, deuxième, troisième et quatrième état de modulation $\Delta\varphi1$, $\Delta cp2$, $\Delta\varphi3$ et $\Delta\varphi4$. Les mesures sont ici échantillonnées sur chaque période de modulation. Pour cette deuxième série de mesures, la modulation du déphasage $\Delta\varphi$ entre les deux signaux contra-propagatif est identique à ce qui a été décrit précédemment en lien avec la figure 9.

Dans ce mode de mise en œuvre, le deuxième terme de démodulation D2 se calcule selon l'expression suivante

[Math. 5]

$$D2 = P21 - P22 - P23 + P24$$

L'invention n'est pas limitée aux valeurs d'états de modulation mentionnées précédemment à titre d'exemple, et est compatible avec des états de modulation opposés deux à deux pouvant prendre toute valeur.

Le signal lumineux d'entrée 3 décrit précédemment est un signal carré. L'invention n'est toutefois pas limitée à cette forme de signal et est compatible avec tout signal carré, présentant un rapport cyclique quelconque, ou avec tout signal lumineux périodique présentant au moins deux niveaux de puissance. Ainsi, l'invention est compatible avec un signal périodique présentant plusieurs échelons, par exemple 3 ou 4 échelons, ou encore un signal périodique ne présentant pas d'échelon, par exemple une sinusoïde.

En particulier, selon un mode de réalisation, le générateur de signal lumineux 2 comporte des moyens de modulation du signal lumineux configurés pour que le signal lumineux d'entrée 3 soit un signal carré, ou en créneau, de rapport cyclique inférieur ou égal à 50%, par exemple ici égal à 47% et présentant, en un premier point du signal lumineux d'entrée 3, une première valeur de puissance d'entrée égale à sa puissance moyenne multipliée par un gain égal à la constante $\alpha$, ici un gain de 2 et, en un deuxième point du signal lumineux d'entrée 3, une deuxième valeur de puissance d'entrée non nulle et différente de la première valeur de puissance d'entrée.

L'invention n'est pas limitée aux modes de mise en œuvre et de réalisation décrits précédemment en lien avec les figures 1 à 10.

Notamment, le circuit de contrôle 18 décrit précédemment est commandé par une boucle d'asservissement. Il est toutefois parfaitement possible qu'il soit commandé manuellement par exemple en paramétrant manuellement les moyens de commande centralisés 19 par modification d'un code programme ou en manipulant un ou plusieurs composants, par exemple des potentiomètres.

En outre, le modulateur de phase 20 décrit précédemment comporte deux paires d'électrodes situées sur chacun des bras 13 et 14 du séparateur optique 9. En variante, il serait possible que le modulateur de phase ne comporte qu'une seule paire d'électrode située sur un seul des deux bras 13 et 14

L'invention est compatible avec tout type de modulateur de phase permettant d'appliquer un déphasage entre les deux signaux contra-propagatifs, par exemple un modulateur de phase comportant, au lieu de la paire d'électrodes ou des paires d'électrodes décrites précédemment, un ou plusieurs système d'électrode comprenant un nombre d'électrodes différent de 2, par exemple 3 ou 4 électrodes, ou encore un modulateur de phase qui serait situé au niveau de la fibre optique, par exemple au niveau d'une l'une et/ou de l'autre des extrémité 26 et 27.

Par ailleurs, l'invention est compatible avec une modulation de phase comportant tout nombre pair d'états, par exemple six états ou douze états.

Le circuit de contrôle 18 décrit précédemment comporte un modulateur électro-optique. En variante, le gyromètre selon l'invention peut comporter tout type de modulateur permettant d'ajuster l'équilibrage des puissances, y compris un modulateur mécanique permettant d'ajuster localement la géométrie de la fibre, notamment par pincement.

Bien qu'il soit particulièrement avantageux que les premières valeurs de puissance de sortie soient supérieures aux deuxièmes valeurs de puissance de sortie, afin de réaliser la première série de mesures sur des valeurs de puissance de sortie supérieures aux valeurs de puissance de sortie sur lesquelles est réalisée la deuxième série de mesures, l'invention est compatible avec une première série de mesures réalisée sur des valeurs de puissance de sortie inférieures aux valeurs de puissance de sortie sur lesquelles est réalisées la deuxième série de mesures..

Bien que dans les exemple précédemment décrit en lien avec les figures 3 à 11, les mesures des premières séries de mesures sont réalisées sur la première moitié de la période de modulation et les mesures des deuxièmes séries de mesures sont réalisées sur la deuxième moitié de la période de modulation, il est possible de réaliser les mesures des première séries de mesures sur la deuxième moitié de la période de modulation et les mesures des deuxièmes séries de mesures sur la première moitié de la période de modulation.

Enfin, bien que le procédé décrit précédemment comporte un ajustement de l'équilibrage des voies de l'interféromètre asservi sur l'annulation du deuxième terme de modulation, un aspect de l'invention concerne un procédé analogue à ce qui a été décrit précédemment, mais qui ne comprend pas l'étape d'ajustement de l'équilibrage des voies de l'interféromètre. Ainsi, le procédé selon cet aspect permet simplement d'obtenir le deuxième terme de démodulation représentatif du Kerr. Grâce au procédé selon cet aspect, l'homme du métier peut s'affranchir de l'ajustement des voies de l'interféromètre et par exemple tenir compte dans un calcul de la valeur du deuxième terme de démodulation pour compenser la valeur de la rotation, ou encore asservir un autre paramètre que l'équilibrage des voies sur l'annulation du deuxième terme de démodulation.

## Revendications

1. Procédé de réduction de l'effet Kerr dans un dispositif de mesure interférométrique (1) comportant un générateur de signal lumineux (2) configuré pour émettre un signal lumineux périodique d'entrée (3) présentant au moins deux valeurs de puissance d'entrée (Pe1, Pe2) non nulles, et un interféromètre de Sagnac (4) comprenant une boucle optique (10), un séparateur (9) configuré pour coupler le signal lumineux périodique d'entrée (3) à la boucle optique (10) de façon à diviser le signal lumineux (3) en un premier signal (15) et en un deuxième signal (16) mutuellement contra-propagatifs qui présentent chacun au moins deux valeurs de puissance correspondant chacune à une valeur de puissance d'entrée et qui se propagent en sens contraires dans la boucle optique (10) et pour combiner lesdits signaux contra-propagatifs (15, 16) après leur propagation dans la boucle (10) de façon à former un signal de sortie (11) périodique présentant au moins deux valeurs de puissance de sortie correspondant chacun à une valeur de puissance d'entrée, le procédé comprenant une modulation périodique à au moins deux états opposés ($\Delta\varphi1$, $\Delta\varphi3$ ; $\Delta\varphi2$, $\Delta\varphi4$) du déphasage entre les deux signaux contra-propagatifs (15, 16) et le procédé étant **caractérisé en ce qu'**il comprend, sur une même période de modulation,

   a. une première série de mesures qui comporte au moins deux mesures de puissance de sortie (PS) en des points du signal de sortie (11) qui présentent des premières valeurs de puissance de sortie (PS) correspondant à une première valeur de puissance d'entrée et qui correspondent à des états de modulation opposés ;
   b. une première détermination de déphasage entre les deux signaux contra-propagatifs présentant chacun une valeur de puissance correspondant à la première valeur de puissance d'entrée, et une annulation de ce déphasage qui comporte un ajustement de la modulation asservi sur l'annulation d'un premier terme de démodulation (D1) calculé qui est fonction desdites au moins deux mesures de la première série de mesures et qui est représentatif dudit déphasage, puis
   c. une deuxième série de mesures qui comporte au moins deux mesures en des points du signal de sortie (11) qui présentent des deuxièmes valeurs de puissance de sortie correspondant à une deuxième valeur de puissance d'entrée et qui correspondent à des états de modulation opposés;
   d. une deuxième détermination de déphasage entre les deux signaux contra-propagatifs (15, 16) présentant chacun une valeur de puissance correspondant à la deuxième valeur de puissance d'entrée, et une annulation de ce déphasage asservi sur l'annulation d'un deuxième terme de démodulation calculé qui est fonction desdites au moins deux mesures de la deuxième série de mesures et qui est représentatif du déphasage.

2. Procédé selon la revendication 1, dans lequel l'annulation du déphasage comporte un ajustement du rapport des puissances moyennes des signaux contra-propagatifs (15, 16) qui est asservi sur l'annulation du deuxième terme de démodulation (D2).

3. Procédé selon la revendication 1 ou 2, dans lequel la modulation est une modulation à quatre états opposés deux à deux ($\Delta\varphi1$, $\Delta\varphi2$, $\Delta\varphi3$, $\Delta\varphi4$).

4. Procédé selon l'une quelconque des revendications 1 à 3, dans lequel la première série de mesures et la deuxième série de mesures sont réalisées en des points du signal de sortie qui correspondent aux mêmes états de modulation.

5. Procédé selon l'une quelconque des revendications 1 à 4, dans lequel

   a. la première série de mesures comporte une première mesure (P11), une deuxième mesure (P12), une troisième mesure (P13) et une quatrième mesure (P14) en des points du signal de sortie (11) qui correspondent respectivement à un premier état de modulation ($\Delta\varphi1$), à un deuxième état de modulation ($\Delta\varphi2$), à un troisième état de modulation ($\Delta\varphi3$) et à un quatrième état de modulation ($\Delta\varphi4$), le premier et le troisième états de modulation étant opposés et le deuxième et le quatrième état de modulation étant opposés, le premier terme de démodulation (D1) étant égal à la différence entre la somme des première et quatrième mesures et la somme des deuxième et troisième mesures ;
   b. la deuxième série de mesures comporte une cinquième mesure (P21), une sixième mesure (P22), une septième mesure (P23) et une huitième mesure (P24) en des points du signal de sortie (11) qui correspondent respectivement au premier état de modulation ($\Delta\varphi1$), au deuxième état de modulation ($\Delta\varphi2$), au troisième état de modulation ($\Delta\varphi3$) et au quatrième état de modulation ($\Delta\varphi4$), le deuxième terme de démodulation (D2) étant égal à la différence entre la somme des cinquième et huitième mesures et la somme des sixième et septième mesures.

6. Procédé selon l'une quelconque des revendications 1 à 3, dans lequel la première série de mesures et la deuxième série de mesures sont réalisées en des points du signal de sortie qui correspondent à des états de modulation distincts.

7. Procédé selon l'une quelconque des revendications 1 à 6, dans lequel la période de modulation est égale au double du temps de parcours ($\tau$) des signaux contra-propagatifs (15, 16) dans la boucle optique (10) divisé par une valeur choisie parmi les nombres entiers positifs impairs.

8. Procédé selon l'une quelconque des revendications 1 à 7, dans lequel la première valeur de puissance d'entrée et la deuxième valeur de puissance d'entrée sont choisies de telle manière que les premières valeurs de puissance de sortie sont supérieures aux deuxièmes valeurs de puissance de sortie.

9. Procédé selon l'une quelconque des revendications 1 à 8, dans lequel l'ajustement du rapport des puissances moyennes des deux signaux contra-propagatifs (15, 16) comporte un contrôle électro-optique par une polarisation en tension du séparateur (9).

10. Procédé selon l'une quelconque des revendications 1 à 9, comportant une étape de modulation de la puissance du signal lumineux périodique d'entrée (3) par un signal de commande de modulation de puissance d'entrée de type carré ou créneau dont le rapport cyclique est inférieur ou égal à 50%, de façon que le signal lumineux périodique d'entrée modulé présente :

    - en un premier point du signal périodique d'entrée (3), une première valeur de puissance d'entrée égale au produit de la puissance moyenne du signal périodique d'entrée par un gain compris entre 1,6 et 2,4,
    - en un deuxième point du signal périodique d'entrée (3), une deuxième valeur de puissance d'entrée non nulle et différente de la première valeur de puissance d'entrée.

11. Procédé selon la revendication 10, dans lequel le signal de commande de modulation présente un rapport cyclique strictement inférieur à 50%.

12. Procédé selon la revendication 10 ou 11, dans lequel la première valeur de puissance d'entrée est supérieure à la deuxième valeur de puissance d'entrée.

13. Dispositif de mesure interférométrique (1) configuré pour mettre en œuvre la méthode selon l'une quelconque des revendications 1 à 12.

14. Dispositif selon la revendication 13, le dispositif (1) étant un gyromètre à fibre optique.

**Patentansprüche**

1. Verfahren zur Verminderung des Kerr-Effekts in einer interferometrischen Meßvorrichtung (1) mit einem Lichtsignalgenerator (2), der dazu ausgelegt ist, ein periodisches Eingangslichtsignal (3) auszusenden, das mindestens zwei von Null verschiedene Eingangsleistungswerte (Pe1, Pe2) aufweist, und einem Sagnac-Interferometer (4), das eine optische Schleife (10), einen Separator (9), der dazu ausgelegt ist, das periodische Eingangslichtsignal (3) an die optische Schleife (10) zu koppeln, um das Lichtsignal (3) in ein erstes Signal (15) und ein zweites Signal (16) zu teilen, die zueinander gegenläufig sind und die jeweils mindestens zwei Leistungswerte darstellen, die jeweils einem Eingangsleistungswert entsprechen und die sich in entgegengesetzten Richtungen in der optischen Schleife (10) ausbreiten, und um die gegenläufigen Signale (15, 16) nach Ausbreitung in der Schleife (10) zu kombinieren, um ein periodisches Ausgangssignal (11) zu bilden, das mindestens zwei Ausgangsleistungswerte aufweist, die jeweils einem Eingangsleistungswert entsprechen, wobei das Verfahren eine periodische Modulation bei mindestens zwei entgegengesetzten Zuständen ($\Delta\varphi1$, $\Delta\varphi3$; $\Delta\varphi2$, $\Delta\varphi4$) der Phasenverschiebung zwischen den beiden gegenläufigen Signalen (15, 16) aufweist und das Verfahren **dadurch gekennzeichnet** ist, das es in derselben Modulationsperiode

   a. eine erste Reihe Messungen, die mindestens zwei Ausgangsleistungsmessungen (PS) an Punkten des Ausgangssignals (11) aufweist, die einem ersten Eingangsleistungswert entsprechen und die entgegengesetzten Modulationszuständen entsprechen;
   b. eine erste Bestimmung der Phasenverschiebung zwischen den beiden gegenläufigen Signalen, die jeweils einen dem ersten Eingangsleistungswert entsprechenden Leistungswert haben und eine Annullierung dieser Phasenverschiebung aufweisen, die eine Anpassung der geregelten Modulation an die Annullierung eines ersten berechneten Demodulationsbegriffs (D1), der von den besagten mindestens zwei Messungen der ersten Reihe Messungen abhängt und der für die Phasenverschiebung repräsentativ ist, aufweist, dann
   c. eine zweite Reihe Messungen, die mindestens zwei Messungen an Punkten des Ausgangssignals (11) aufweist, die zweite Ausgangsleistungswerte hat, die einem zweiten Eingangsleistungswert entsprechen und die entgegengesetzten Modulationszuständen entsprechen;
   d. eine zweite Bestimmung der Phasenverschiebung zwischen den beiden gegenläufigen Signalen (15, 16), die jeweils einen dem zweiten Eingangsleistungswert entsprechenden Leistungswert haben, und eine Annullierung dieser Phasenverschiebung, die an die Annullierung eines zweiten berechneten Demodulationsbegriffs angepaßt ist, der von den mindestens zwei Messungen der zweiten Reihe Messungen abhängt und der für die Phasenverschiebung repräsentativ ist,

   aufweist.

2. Verfahren gemäß Anspruch 1, bei dem die Annullierung der Phasenverschiebung ein Anpassen des Verhältnisses der mittleren Leistungen der gegenläufigen Signale (15, 16) aufweist, das an die Annullierung des zweiten Demodulationsbegriffs (D2) angepaßt ist .

3. Verfahren gemäß Anspruch 1 oder 2, bei dem die Modulation eine Modulation mit vier paarweise entgegengesetzten Zuständen ($\Delta\varphi1$, $\Delta\varphi2$, $\Delta\varphi3$, $\Delta\varphi4$) ist.

4. Verfahren gemäß einem der Ansprüche 1 bis 3, bei dem die erste Reihe Messungen und die zweite Reihe Messungen an Punkten des Ausgangssignals durchgeführt werden, die denselben Modulationszuständen entsprechen.

5. Verfahren gemäß einem der Ansprüche 1 bis 4, bei dem

   a. die erste Reihe Messungen eine erste Messung (P11), eine zweite Messung (P12), eine dritte Messung (P13) und eine vierte Messung (P14) an Punkten des Ausgangssignals (11) aufweist, die einem ersten Modulationszustand ($\Delta\varphi1$), einem zweiten Modulationszustand ($\Delta\varphi2$), einem dritten Modulationszustand ($\Delta\varphi3$) beziehungsweise einem vierten Modulationszustand ($\Delta\varphi4$) entsprechen, wobei der erste und der dritte Modulationszustand entgegengesetzt sind und der zweite und der vierte Modulationszustand entgegengesetzt sind, wobei der erste Demodulationsbegriff (D1) gleich der Differenz zwischen der Summe der ersten und vierten Messungen und der Summe der zweiten und der dritten Messungen ist;
   b. die zweite Reihe Messungen eine fünfte Messung (P21), eine sechste Messung (P22), eine siebente Messung (P23) und eine achte Messung (P24) an Punkten des Ausgangssignals (11) aufweist, die dem ersten Modulationszustand ($\Delta\varphi1$), dem zweiten Modulationszustand ($\Delta\varphi2$), dem dritten Modulationszustand ($\Delta\varphi3$) beziehungsweise dem vierten Modulationszustand ($\Delta\varphi4$) entsprechen, wobei der erste und der dritte Modulationszustand entgegengesetzt sind und der zweite und der vierte Modulationszustand entgegengesetzt sind, wobei der zweite Demodulationsbegriff (D2) gleich der Differenz zwischen der Summe der fünften und achten Messungen und der Summe der sechsten und der siebenten Messungen ist.

6. Verfahren gemäß einem der Ansprüche 1 bis 3, bei dem die erste Reihe Messungen und die zweite Reihe Messungen an Punkten des Ausgangssignals durchgeführt werden, die bestimmten Modulationszuständen entsprechen.

7. Verfahren gemäß einem der Ansprüche 1 bis 6, bei dem die Modulationsperiode gleich dem Doppelten der Durchlaufzeit ($\tau$) der gegenläufigen Signale (15, 16) in der optische Schleife (10), dividiert durch einen aus den ganzen positiven ungeraden Zahlen ausgesuchten Wert, ist.

8. Verfahren gemäß einem der Ansprüche 1 bis 7, bei dem der erste Eingangsleistungswert und der zweite Eingangsleistungswert so ausgesucht sind, daß die ersten Ausgangsleistungswerte größer als die zweiten Ausgangsleistungswerte sind.

9. Verfahren gemäß einem der Ansprüche 1 bis 8, bei dem das Anpassen des Verhältnisses der mittleren Leistungen der beiden gegenläufigen Signale (15, 16) eine elektrooptische Kontrolle durch eine Polarisation unter Spannung des Separators (9) aufweist.

10. Verfahren gemäß einem der Ansprüche 1 bis 9, mit einem Schritt der Modulation des periodischen Eingangslichtsignals (3) durch ein Signal der Steuerung der Modulation der Eingangsleistung vom Typ Quadrat oder Rechteck, deren zyklisches Verhältnis kleiner als oder gleich 50 % ist, damit das modulierte periodische Eingangslichtsignal

- an einem ersten Punkt des periodischen Eingangssignal (3) einen ersten Eingangsleistungswert hat, der gleich dem Produkt aus der mittleren Leistung des periodischen Eingangssignals und einem Gewinn zwischen 1,6 und 2,4 ist,
- an einem zweiten Punkt des periodischen Eingangssignals (3) einen zweiten Eingangsleistungswert hat, der von Null und dem ersten Eingangsleistungswert verschieden ist.

11. Verfahren gemäß Anspruch 10, bei dem das Modulationssteuerungssignal en zyklisches Verhältnis von strikt kleiner als 50 % aufweist.

12. Verfahren gemäß Anspruch 10 oder 11, bei dem der erste Eingangsleistungswert größer als der zweite Eingangsleistungswert ist.

13. Interferometrische Meßvorrichtung (1) zur Durchführung des Verfahrens gemäß einem der Ansprüche 1 bis 12.

14. Vorrichtung gemäß Anspruch 13, wobei die Vorrichtung (1) ein Glasfaserkreisel ist.

**Claims**

1. A method for reducing the Kerr effect in an interferometric measuring device (1) including a light signal generator (2) configured to emit a periodic input light signal (3) having at least two non-zero input power values (Pe1, Pe2), and a Sagnac interferometer (4) comprising an optical loop (10), a splitter (9) configured to couple the periodic input light signal (3) to the optical loop (10) in order to split the light signal (3) into mutually counter-propagating first signal (15) and second signal (16), which each have at least two power values each corresponding to an input power value and which propagate in opposite directions in the optical loop (10) and to combine said counter-propagating signals (15, 16) after their propagation in the loop (10) in order to form a periodic output signal (11) having at least two output power values each corresponding to an input power value, the method comprising a periodic modulation with at least two opposite states ($\Delta\phi1$, $\Delta\phi3$; $\Delta\phi2$, $\Delta\phi4$) of the phase shift between the two counter-propagating signals (15, 16) and, over a same modulation period,

a. a first series of measurements that includes at least two output power measurements (PS) at points of the output signal (11) that have first output power values (PS) corresponding to a first input power value and that correspond to opposite modulation states;
b. a first phase-shift determination between the two counter-propagating signals each having a power value corresponding to the first input power value, and a cancellation of this phase shift that includes adjusting the modulation depending on the cancellation of a first calculated demodulation term (D1) that is function of said at least two measurements of the first series of measurements and that is representative of said phase shift, then
c. a second series of measurements that includes at least two measurements at points of the output signal (11) that have second output power values corresponding to a second input power value and that correspond to opposite modulation states;
d. a second phase-shift determination between the two counter-propagating signals (15, 16) each having a power value corresponding to the second input power value, and a cancellation of this phase shift, depending on the cancellation of a second calculated demodulation term that is function of said at least two measurements of the second series of measurements and that is representative of the phase shift.

2. The method according to claim 1, wherein the phase-shift cancellation includes adjusting the ratio between the average powers of the counter-propagating signals (15, 16), depending on the cancellation of the second demodulation term (D2).

3. The method according to claim 1 or 2, wherein the modulation is a modulation with four states opposed two by two ($\Delta\phi 1$, $\Delta\phi 2$, $\Delta\phi 3$, $\Delta\phi 4$).

4. The method according to any one of claims 1 to 3, wherein the first series of measurements and the second series of measurements are made at points of the output signals that correspond to the same modulation states.

5. The method according to any one of claims 1 to 4, wherein

   a. the first series of measurements includes a first measurement (P11), a second measurement (P12), a third measurement (P13) and a fourth measurement (P14) at points of the output signal (11) that correspond to a first modulation state ($\Delta\phi 1$), a second modulation state ($\Delta\phi 2$), a third modulation state ($\Delta\phi 3$) and a fourth modulation state ($\Delta\phi 4$), respectively, the first and third modulation states being opposite and the second and fourth modulation states being opposite, the first demodulation term (D1) being equal to the difference between the sum of the first and fourth measurements and the sum of the second and third measurements;
   b. the second series of measurements includes a fifth measurement (P21), a sixth measurement (P22), a seventh measurement (P23) and a eighth measurement (P24) at points of the output signal (11) that correspond to a first modulation state ($\Delta\phi 1$), a second modulation state ($\Delta\phi 2$), a third modulation state ($\Delta\phi 3$) and a fourth modulation state ($\Delta\phi 4$), respectively, the second demodulation term (D2) being equal to the difference between the sum of the fifth and eighth measurements and the sum of the sixth and seventh measurements.

6. The method according to any one of claims 1 to 3, wherein the first series of measurements and the second series of measurements are made at points of the output signal that correspond to distinct modulation states.

7. The method according to any one of claims 1 to 6, wherein the modulation period is equal to twice the travel time ($\tau$) of the counter-propagating signals (15, 16) in the optical loop (10) divided by a value chosen among the odd positive integer numbers.

8. The method according to any one of claims 1 to 7, wherein the first input power value and the second input power value are chosen in such a way that the first output power values are higher than the second output power values.

9. The method according to any one of claims 1 to 8, wherein the ratio adjustment between the average powers of the two counter-propagating signals (15, 16) includes an electro-optical control by voltage polarisation of the splitter (9).

10. The method according to any one of claims 1 to 9, including a step of modulating the power of the periodic input light signal (3) by way of a square-wave or rectangular-wave input power modulation control signal the duty cycle of which is lower than or equal to 50%, in such a way that the modulated periodic input light signal has:

    - at a first point of the periodic input signal (3), a first input power value equal to the product of the average power of the periodic input signal by a gain between 1.6 and 2.4,
    - at a second point of the periodic input signal (3), a second, non-zero input power value, that is different from the first input power value.

11. The method according to claim 10, wherein the modulation control signal has a duty cycle strictly lower than 50%.

12. The method according to claim 10 or 11, wherein the first input power value is higher than the second input power value.

13. An interferometric measurement device (1) configured to implement the method according to any one of claims 1 to 12.

14. The device according to claim 13, the device (1) being a fibre-optic gyroscope.

EP 4 302 050 B1

**Figure 1**

**Figure 2**

**Figure 3**

EP 4 302 050 B1

**Figure 4**

**Figure 5**

**Figure 6**

EP 4 302 050 B1

**Figure 7**

**Figure 8**

EP 4 302 050 B1

Figure 9

EP 4 302 050 B1

Figure 10

EP 4 302 050 B1

**Figure 11**

EP 4 302 050 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4773759 A

**Littérature non-brevet citée dans la description**

- **H. C. LEFÈVRE**. The fiber-optic gyroscope. Artech House, 2014

- **N GROSSARD** ; **B PEDRONO** ; **J HAUDEN** ; **H PORTE**. Modulateur d'intensité LiNbO3 à fort taux d'extinction. *JNOG, ME7*, 2007